# EUROPÄISCHE PATENTSCHRIFT

(11) **EP 1 990 628 B1**
(45) Veröffentlichungstag und Bekanntmachung des Hinweises auf die Patenterteilung: **23.12.2009**
(21) Anmeldenummer: 07009290.3
(22) Anmeldetag: 09.05.2007
(51) Int. Cl.: G01N 21/09

(54) **Küvette**
Vessel
Cuvette

(43) Veröffentlichungstag der Anmeldung: 12.11.2008
(73) Patentinhaber: SICK MAIHAK GmbH, 79183 Waldkirch (DE)
(72) Erfinder: Kaufmann, Jürgen, 79211 Denzlingen (DE); Beyer, Thomas, Dr., 79111 Freiburg (DE); Sommer, Dieter, 78120 Furtwangen (DE); Meier, Gerhard, 79100 Freiburg (DE)
(74) Vertreter: Ludewigt, Christoph

(56) Entgegenhaltungen:
- EP-A- 0 256 314
- EP-A1- 0 195 179
- EP-A2- 0 263 931
- DE-A1- 4 446 723
- JP-A- 2005 241 249
- US-A- 3 980 509

## Beschreibung

Die Erfindung betrifft eine Küvette gemäß dem Oberbegriff des Patentanspruchs 1.

Zur Analyse von Gasen, insbesondere zur In-Situ Gasanalyse, ist es bekannt, ein Laserspektrometer zu verwenden. Für dieses Laserspektrometer wird eine Referenzküvette benötigt, die das zu messende Gas in definierter Konzentration enthält. Ein derartiges Laserspektrometer ist beispielsweise der DE 35 10 052 C2 zu entnehmen. Als Referenzgas wird insbesondere HF verwendet. Problematisch dabei ist jedoch, dass es kaum möglich ist, gasförmiges HF über längere Zeiträume in einer Küvette bei konstantem Druck zu halten. Die Ursache hierfür liegt insbesondere in Reaktionen des HF mit den Wänden der Küvette und gegebenenfalls vorhandenen Undichtigkeiten der Küvette.

Unter einer Küvette wird eine verschlossene Kammer mit Fenstern an den Stirnseiten verstanden. Durch die Fenster tritt das Licht in die Küvette ein und wieder aus und durchstrahlt dabei das in der Küvette vorhandene Gas.

Um die Wandreaktionen und sonstigen Verluste an Gas in der Küvette auszugleichen, sind beispielsweise Durchflussküvetten bekannt, bei welchen ständig ein Gas, insbesondere HF, durch die Küvette strömt. Allerdings haben diese Küvetten den Nachteil, dass ständig HF-Gas verbraucht wird. Derartige Küvetten sind somit sehr kostenaufwendig.

Weiterhin sind Küvetten bekannt, in welche geringe Mengen an Flusssäure eingefüllt werden und in welchen anschließend ein Unterdruck erzeugt wird. Die Flusssäure verdampft, so dass in der Küvette HF-Gas vorhanden ist. Allerdings ist auf Grund der geringen Menge an Flusssäure diese Küvette nicht langzeitstabil. Reste der Flusssäure können auf die Fenster gelangen und beeinträchtigen die Transmissionen je nach Lage der Küvette. Zudem kann es zur Kondensation an den Küvettenfenstern kommen.

Weiterhin bekannt sind sogenannte Permeation Tubes, d. h. Röhren, in welchen dynamisch Gasmischungen dadurch hergestellt werden können, dass kontrolliert gasförmige Analyte aus einem Vorratsbehälter durch ein Polymermaterial in einen Gasstrom eintreten. Allerdings ist auch mit derartigen Permeation Tubes keine ausreichende Langzeitstabilität gewährleistet.

Aus der DE 35 10 052 C2 ist eine Referenzküvette bekannt, in welcher ein HF-Reservoir angeordnet ist, um Verluste durch Undichtigkeiten oder Reaktionen auszugleichen. Dazu ist an der eigentlichen Referenzkammer eine zusätzliche Vorratskammer angeordnet, die mit der Referenzkammer über eine Fritte gasdurchlässig verbunden ist. Die Vorratskammer wird mit einer Substanz gefüllt, welche bei Erhitzen HF abspaltet, deren Partialdruck von der Temperatur abhängt. HF-Verluste in der Referenzkammer selbst können somit aus dem Vorratsbehälter ersetzt werden. Auch bei dieser Küvette besteht jedoch das Problem, eine genügend große Menge der HF-abspaltenden Substanz über eine ausreichend lange Zeit in der Küvette zu lagern.

Die Aufgabe der Erfindung besteht darin, eine Küvette bereitzustellen, in welcher über eine lange Zeit, beispielsweise für mehr als sechs Monate, eine ausreichende HF-Konzentration gehalten werden kann. Weiterhin soll eine Küvette bereitgestellt werden, mit welcher auch lageunabhängig gemessen werden kann.

Die Aufgabe der Erfindung wird gelöst durch eine Küvette mit den Merkmalen des Patentanspruchs 1.

Vorteilhafte Ausgestaltungen und Weiterbildungen der Erfindung sind in den Unteransprüchen angegeben.

Erfindungsgemäß ist in der Kammer der Küvette als HF-Reservoir ein HF-resistentes, poröses Material angeordnet. Das poröse Material kann eine Substanz, welche bei Erhitzen HF abspaltet, aufnehmen und durch die Kapillarkräfte festhalten. Dadurch ist es möglich, eine ausreichend große Menge an HFabspaltender Substanz wie beispielsweise Flusssäure oder andere Substanzen in der Küvette über lange Zeit zu lagern. In Abhängigkeit von der Temperatur verdampft HF-Gas, so dass eine genügend große Konzentration in der Küvette über einen langen Zeitraum, insbesondere über mehr als sechs Monate, erreicht werden kann. Die Verwendung eines porösen Materials sorgt insbesondere dafür, dass auch in verschiedenen Lagen der Küvette das HF-abspaltende Material nicht direkt an die Fenster der Küvette gelangt und somit die Transmission der Küvette nicht beeinträchtigt wird.

Bei einer besonders vorteilhaften Ausführungsform der Erfindung ist das poröse Material ein Polyethylen-Schaum. Dieser zeichnet sich durch seine HF-Resistenz und die geeignete Porengröße aus, um die HF-abspaltende Substanz, insbesondere Flusssäure, über einen langen Zeitraum zu lagern.

In einer vorteilhaften Ausführungsform der Erfindung weist die Kammer eine erste Kammer und eine zweite Kammer auf, welche durch einen Kanal verbunden sind, wobei die erste Kammer als Messkammer dient und das HF-resistente, poröse Material in der zweiten Kammer angeordnet ist. Dadurch wird besonders zuverlässig verhindert, dass die in dem porösen Material gelagerte HF-abspaltende Substanz an die Fenster der Küvette gelangt. Insbesondere kann auch die zweite Kammer separat ausgetauscht werden, falls HF-abspaltende Substanz nachgefüllt werden muss.

In einer alternativen besonders bevorzugten Ausführungsform ist das HF-resistente, poröse Material auf den Innenwänden der Kammer abgesehen von den Fenstern angeordnet. Diese Anordnung hat den Vorteil, dass Kondensat, welches sich an den Wänden des Küvettenvolumens bildet, aufgesaugt werden kann. Insbesondere verhindert diese Anordnung des Reservoirs, dass sich die HF-abspaltende Substanz je nach Lage der Küvette direkt auf einem der Fenster befindet.

Vorzugsweise ist dabei die Kammer rohrförmig ausgebildet, so dass insbesondere auch das HF-resistente, poröse Material als Rohr auf der Innenseite der Kammerwand angeordnet ist. Ein derartiger Aufbau ist besonders kompakt und kostengünstig herzustellen.

Bei längerer Verwendung der Küvette kann es unter Umständen trotzdem noch zur Tröpfchenbildung auf den Fenstern kommen, wenn diese kälter sind als das restliche Küvettenmaterial. Um eine derartige Tröpfchenbildung zu verhindern, ist bei einer besonders vorteilhaften Ausführungsform der Erfindung an der Kammer eine Vorrichtung zur Erzeugung eines Kältepols angeordnet, an welchem dann die Feuchtigkeit vorzugsweise kondensiert, so dass die Fenster frei von Kondensat gehalten werden können.

Die Fenster der Küvette sind vorzugsweise aus Calciumfluorid (CaF₂) gefertigt, während die Kammer vorzugsweise aus Polytetrafluorethylen, besser bekannt unter dem Handelsnamen Teflon, oder vernickeltem Stahl gefertigt ist.

Die erfindungsgemäße Küvette wird vorzugsweise in einem Laserspektrometer als Referenzküvette verwendet. Eine erfindungsgemäße Vorrichtung zur In-Situ Untersuchung von Gas, insbesondere ein erfindungsgemäßes Laserspektrometer, weist eine Küvette gemäß der Erfindung auf.

Die Erfindung wird anhand der folgenden Figuren ausführlich erläutert. Es zeigen
- Figur 1: einen Längsschnitt durch ein erstes Ausführungsbeispiel einer erfindungsgemäßen Küvette und
- Figur 2: einen Längsschnitt durch ein zweites Ausführungsbeispiel einer erfindungsgemäßen Küvette.

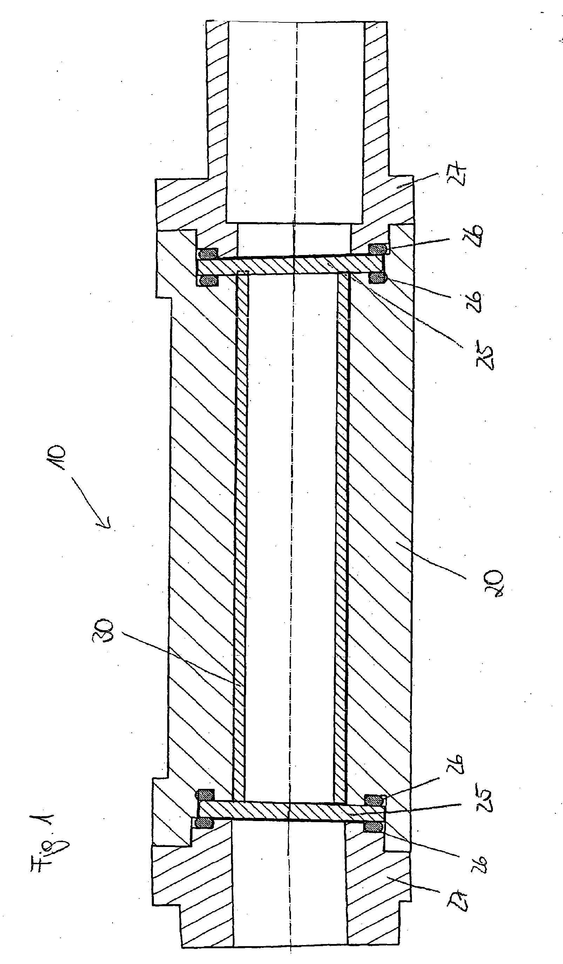

Figur 1 zeigt einen Längsschnitt durch eine Küvette 10, welche eine Kammer 20 aufweist, die im Wesentlichen rohrförmig ausgebildet ist. An den beiden planparallelen Stirnseiten der Kammer 20 ist jeweils ein Fenster 25 angeordnet, welches mit Hilfe von Dichtringen 26 gegen die Kammer 20 abgedichtet ist. Auf der Außenseite der Fenster 25 ist jeweils eine Halterung 27 angeordnet, mit welcher die Küvette 10 beispielsweise in ein Laserspektrometer eingesetzt werden kann, um dort als Referenzküvette verwendet zu werden. Die Kammer 20 ist beispielsweise aus Teflon oder vernickeltem Stahl gefertigt, während die Fenster 25 beispielsweise aus Calciumfluorid gefertigt sind.

Auf der Innenseite der rohrförmigen Kammer 20 ist ein HF-resistentes, poröses Material 30 angeordnet. Das Material 30 ist somit ebenfalls in Form eines Rohrs innerhalb der Kammer 20 angeordnet. Als Material 30 wird insbesondere ein Polyethylen-Schaum verwendet. In dem porösen Material kann durch die Kapillarkräfte eine Substanz festgehalten werden, aus welcher bei Raumtemperatur genügend HF-Gas verdampft, um eine ausreichend große Konzentration von HF-Gas in der Küvette 10 zu erreichen. Eine geeignete HF-abspaltende Substanz ist beispielsweise Flusssäure. Durch die Anordnung des porösen Materials 30 auf der Innenseite der rohrförmigen Kammer 20, wobei das Material 30 an die Fenster 25 anstößt, wird gewährleistet, dass auch an den Fenstern 25 kondensierende HF-abspaltende Substanz in das Material 30 aufgesaugt wird, so dass eine Tröpfchenbildung auf den Fenstern 25 verhindert wird.

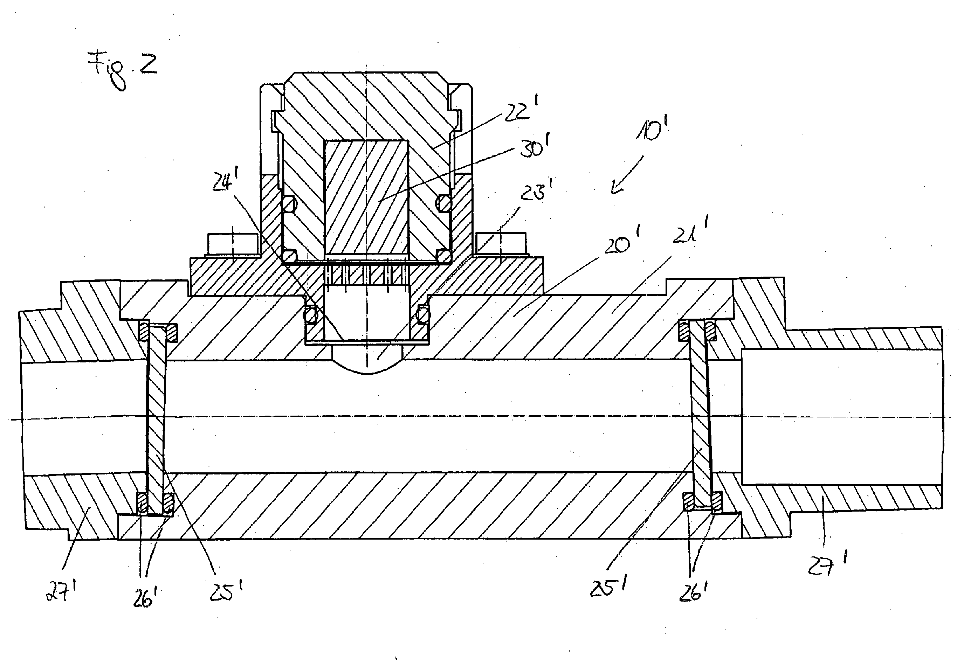

Figur 2 zeigt einen Längsschnitt durch ein zweites Ausführungsbeispiel einer Küvette 10', welche eine Kammer 20' aufweist. Die Kammer 20' ist in diesem Ausführungsbeispiel geteilt in eine erste Kammer 21' und eine zweite Kammer 22', wobei die erste Kammer 21' den eigentlichen Messraum bildet und im Wesentlichen rohrförmig ausgebildet ist. Die Stirnseiten der rohrförmigen ersten Kammer 21' werden durch zwei Fenster 25' verschlossen, welche über Dichtringe 26' die erste Kammer 21' abdichten. Auf der Außenseite der Fenster 25' sind wiederum Halterungen 27' angeordnet, über welche die Küvette 10' in eine Vorrichtung zur In-Situ Untersuchung von Gas, insbesondere von Laserspektrometern, eingebaut werden kann. Die zweite Kammer 22' ist mit der ersten Kammer 21' über einen Kanal 23' verbunden, welcher im Wesentlichen aus einer Bohrung in der Kammerwand der ersten Kammer 21' gebildet ist. In dem Kanal 23' ist zwischen der ersten Kammer 21' und der zweiten Kammer 22' eine Teflonmembran 24' angeordnet.

In der zweiten Kammer 22' ist ein HF-resistentes, poröses Material 30' angeordnet, in welchem eine HF-abspaltende Substanz, beispielsweise Flusssäure, durch die Kapillarkräfte festgehalten und gespeichert ist. Bei Raumtemperatur tritt HF-Gas aus der HF-abspaltenden Substanz aus, diffundiert durch die Teflonmembran 24' in die erste Kammer 21', um dort eine ausreichend große Konzentration an HF-Gas bereitzustellen. Die zweite Kammer 22' ist auswechselbar an der ersten Kammer 21' angeordnet, um gegebenenfalls das HF-Reservoir austauschen zu können, falls nach längerer Verwendung der Küvette 10' das HF-Reservoir aufgefüllt werden muss.

Für die Kammer 20', die Fenster 25' und das poröse Material 30' können die gleichen Materialen wie im ersten Ausführungsbeispiel verwendet werden.

In beiden Ausführungsformen wird durch die Verwendung eines porösen HFresistenten Materials 30, 30' ermöglicht, eine HF-abspaltende Substanz in ausreichend hoher Menge in dem Material 30' zu speichern, ohne dass die Substanz, wie beispielsweise Flusssäure, unkontrolliert im Innenraum der Kammer 20, 20' umherfließt und sich beispielsweise auf den Fenstern 25, 25' absetzt. Die Küvette 10, 10' kann somit lageunabhängig verwendet werden und ermöglicht insbesondere durch die Verwendung des porösen Materials 30, 30' die Bereitstellung einer ausreichend hohen HF-Konzentration für eine ausreichend lange Zeit, insbesondere für mehr als sechs Monate.

Die Bildung von Tröpfchen, welche bei längerer Verwendung gegebenenfalls noch auftreten könnte, kann durch Verwendung eines zusätzlichen Kältepols, welcher in den Figuren nicht dargestellt ist, vermieden werden. Wird eine Stelle der Kammer 20 gezielt gekühlt, kondensiert Feuchtigkeit vorzugsweise an diesem Kältepol, so dass die Fenster 25, 25' von Kondensat freigehalten werden.

### Bezugszeichenliste

- 10, 10': Küvette
- 20, 20': Kammer
- 21': erste Kammer
- 22': zweite Kammer
- 23': Kanal
- 24': Teflonmembran
- 25, 25': Fenster
- 26, 26': Dichtring
- 27, 27': Halterung
- 30, 30': Material

## Patentansprüche

1. Küvette (10, 10') mit einer Kammer (20, 20'), welche an den Stirnseiten mit Fenstern (25, 25') verschlossen ist und mit einem HF-Reservoir, zur Aufnahme einer HF abspaltenden Substanz, **dadurch gekennzeichnet, dass** in der Kammer (20, 20') als HF-Reservoir ein HF-resistentes, poröses Material (30, 30') angeordnet ist, in dessen Poren die HF abspaltende Substanz aufnehmbar ist.

2. Küvette nach Anspruch 1, **dadurch gekennzeichnet, dass** das HF-resistente, poröse Material (30, 30') ein Polyethylen-Schaum ist.

3. Küvette nach einem der vorhergehenden Ansprüche, **dadurch gekennzeichnet, dass** die Kammer (20') eine erste Kammer (21') und eine zweite Kammer (22') aufweist, welche durch einen Kanal (23') verbunden sind, wobei die erste Kammer (21') als Messkammer dient und das HF-resistente, poröse Material (30') in der zweiten Kammer (22') angeordnet ist.

4. Küvette nach einem der vorhergehenden Ansprüche, **dadurch gekennzeichnet, dass** das HF-resistente, poröse Material (30, 30') zumindest einen Teil der Innenwände der Kammer (20, 20') abgesehen von den Fenstern (25, 25') bedeckt.

5. Küvette nach einem der vorhergehenden Ansprüche, **dadurch gekennzeichnet, dass** die Kammer (20, 20') rohrförmig ausgebildet ist.

6. Küvette nach einem der vorhergehenden Ansprüche, **dadurch gekennzeichnet, dass** an der Kammer (20, 20') eine Vorrichtung zur Erzeugung eines Kältepols angeordnet ist.

7. Küvette nach einem der vorhergehenden Ansprüche, **dadurch gekennzeichnet, dass** die Fenster (25, 25') aus CaF₂ gefertigt sind.

8. Verwendung einer Küvette (10, 10') nach einem der vorhergehenden Ansprüche in einem Laserspektrometer als Referenzküvette.

9. Vorrichtung zur In-Situ Untersuchung von Gas, insbesondere Laserspektrometer, mit einer Küvette (10, 10') nach einem der Ansprüche 1 bis 7.

## Claims

1. A cuvette (10, 10') having a chamber (20, 20') which is closed by windows (25, 25') at the end faces and having an HF reservoir for retaining a substance which splits HF, **characterized in that** an HF resistant, porous material (30, 30') is arranged as the HF reservoir in the chamber (20, 20') in which pores the substance which splits HF is retainable.

2. A cuvette in accordance with claim 1, **characterized in that** the HF resistant, porous material (30, 30') is a polyethylene foam.

3. A cuvette according to any of the preceding claims, **characterized in that** the chamber (20') has a first chamber (21') and a second chamber (22') which are connected by a passage (23'), with the first chamber (21') serving as a measurement chamber and the HF resistant, porous material (30') being arranged in the second chamber (22').

4. A cuvette according to any of the preceding claims, **characterized in that** the HF resistant, porous material (30, 30') covers at least a part of the inner walls of the chamber (20, 20') apart from the windows (25, 25').

5. A cuvette according to any of the preceding claims, **characterized in that** the chamber (20, 20') is made in tubular form.

6. A cuvette according to any of the preceding claims, **characterized in that** a device for the production of a cold pole is arranged at the chamber (20, 20').

7. A cuvette according to any of the preceding claims, **characterized in that** the windows (25, 25') are made from CaF₂.

8. Use of a cuvette (10, 10') according to any of the preceding claims as a reference cuvette in a laser spectrometer.

9. A device for the in situ analysis of gas, in particular a laser spectrometer, having a cuvette (10, 10') according to any one of claims 1 to 7.

## Revendications

1. Cuvette (10, 10') dotée d'une chambre (20, 20') fermée sur ses côtés frontaux par des fenêtres (25, 25') et dotée d'un réservoir HF qui reprend une substance qui dissocie HF,
**caractérisée en ce que**
un matériau poreux (30, 30') résistant aux HF et dont les pores reprennent la substance dissociant HF est disposé dans la chambre (20, 20') comme réservoir HF.

2. Cuvette selon la revendication 1, **caractérisée en ce que** le matériau poreux (30, 30') résistant aux HF est une mousse de polyéthylène.

3. Cuvette selon l'une des revendications précédentes, **caractérisée en ce que** la chambre (20') présente une première chambre (21') et une deuxième chambre (22') qui sont reliées par un canal (23'), la première chambre (21') servant de chambre de mesure et le matériau poreux (30') résistant aux HF étant disposé dans la deuxième chambre (22').

4. Cuvette selon l'une des revendications précédentes, **caractérisée en ce que** le matériau poreux (30, 30') résistant aux HF recouvre au moins une partie des parois intérieures de la chambre (20, 20'), à l'exception des fenêtres (25, 25').

5. Cuvette selon l'une des revendications précédentes, **caractérisée en ce que** la chambre (20, 20') a une forme tubulaire.

6. Cuvette selon l'une des revendications précédentes, **caractérisée en ce qu'**un dispositif de formation d'un pôle froid est disposé sur la chambre (20, 20').

7. Cuvette selon l'une des revendications précédentes, **caractérisée en ce que** les fenêtres (25, 25') sont réalisées en CaF₂.

8. Utilisation d'une cuvette (10, 10') selon l'une des revendications précédentes comme cuvette de référence d'un spectromètre laser.

9. Dispositif d'étude de gaz in situ, en particulier spectromètre laser, doté d'une cuvette (10, 10') selon l'une des revendications 1 à 7.
